# FASCICULE DE BREVET EUROPEEN

(11) **EP 3 440 933 B1**
(45) Date de publication et mention de la délivrance du brevet: **10.06.2020**
(21) Numéro de dépôt: 18188421.4
(22) Date de dépôt: 10.08.2018
(51) Int. Cl.: A01M 7/00

(54) **DISPOSITIF DE RÉGULATION HYDRAULIQUE POUR SYSTÈME DE COMMANDE AVEC AMORTISSEMENT POUR RAMPE DE PULVÉRISATION, ET SYSTÈME COMPRENANT LEDIT DISPOSITIF**
HYDRAULISCHE REGULIERUNGSVORRICHTUNG FÜR STEUERSYSTEM MIT DÄMPFUNG FÜR SPRÜHBALKEN, UND SYSTEM, DAS DIESE VORRICHTUNG UMFASST
HYDRAULIC CONTROL DEVICE FOR CONTROL SYSTEM WITH DAMPING FOR SPRAY BOOM, AND SYSTEM COMPRISING SAID DEVICE

(30) Priorité: 11.08.2017 FR 1757675
(43) Date de publication de la demande: 13.02.2019
(73) Titulaire: Artec Pulverisation, 85320 Corpe (FR)
(72) Inventeur: MAYOUD, Bruno, 85320 Corpe (FR); RAVINEAU, Julien, 85400 Luçon (FR); CHEVALLIER, Jean-Pierre, 85460 La Faute-sur-Mer (FR)
(74) Mandataire: Cabinet Chaillot

(56) Documents cités:
- FR-A1- 2 891 110
- US-A- 4 288 034
- US-B1- 6 293 475

## Description

La présente invention concerne le domaine des engins de pulvérisation utilisés dans le domaine agricole, et en porte plus particulièrement sur un dispositif de régulation hydraulique pour un système de commande avec amortissement pour rampe de pulvérisation destiné à équiper un engin de pulvérisation, ainsi que sur un système de commande comprenant un tel dispositif.

Comme cela est bien connu, un tel engin de pulvérisation, généralement un engin automoteur, comprend une rampe de pulvérisation formée de deux tronçons de rampe montés chacun sur un support solidaire de l'engin, avec un tronçon de rampe de chaque côté de l'engin. Les deux tronçons de rampe de pulvérisation sont montés à rotation autour d'un axe de rotation généralement vertical, de façon à être déplaçables entre une position déployée, dans laquelle ils s'étendent globalement perpendiculairement à la direction de déplacement de l'engin pour permettre la pulvérisation, et une position repliée, dans laquelle les deux tronçons de rampe ont été repliés pour s'étendre chacun le long de l'engin et ainsi lui permettre de circuler sur route.

Le passage de la position repliée à la position déployée, et inversement, est effectué pour chaque tronçon par un vérin hydraulique à double effet ayant une première extrémité solidaire dudit support et une seconde extrémité solidaire du tronçon en un point se situant en avant, dans la direction de déplacement de l'engin, dudit axe de rotation du tronçon, de façon à créer un bras de levier.

Afin d'éviter une casse au niveau de la liaison entre un tronçon de rampe et ledit support lors du déploiement des tronçons et du déplacement de l'engin avec les tronçons en position déployée, il est nécessaire d'assurer un amortissement du tronçon.

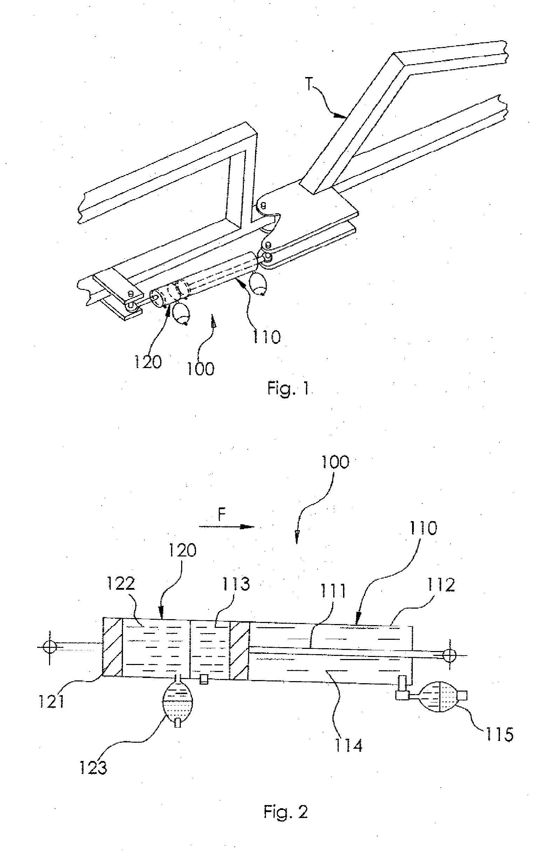

Le brevet français FR 2 891 110 A1, dont les Figures 1 et 2 sont reproduites en tant que Figures 1 et 2 de la présente demande, divulgue une solution permettant d'assurer un tel amortissement. Comme on peut le voir sur les Figures 1 et 2 de la présente demande, qui montre un tronçon T dans la position déployée, cette solution consiste en l'utilisation, comme vérin de commande du déplacement d'un tronçon T, d'un vérin hydraulique à double effet 100 constitué d'un vérin actif à double effet 110 et d'un vérin passif 120. Le vérin actif à double effet 110 comporte un piston 111 séparant le corps de vérin 112 en deux chambres 113, 114 respectivement reliées à un circuit hydraulique, l'une d'elles étant en liaison avec un élément d'amortissement 115. On comprend aisément que, de manière classique, l'extension ou la rétractation du piston 111, et donc le pivotement du tronçon T, est obtenue par introduction d'un fluide sous pression, provenant d'une source de fluide sous pression, dans l'une des deux chambres 113, 114, le fluide contenu dans l'autre des deux chambres 113, 114 étant simultanément refoulé vers un réservoir de fluide.

Le vérin passif 120 est situé dans le prolongement longitudinal du vérin actif 110 et comporte un piston 121 fermant une chambre 122 remplie d'un fluide hydraulique en liaison avec un élément d'amortissement 123.

En fonction d'un mouvement du tronçon T vers l'avant ou vers l'arrière, le fluide hydraulique est expulsé soit vers l'élément d'amortissement 115, soit vers l'élément d'amortissement 123. L'élément d'amortissement 115, 123 est agencé pour fournir une force de rappel élastique à l'encontre du fluide hydraulique entrant dans l'élément d'amortissement 115, 123.

On comprend aisément que lorsque le tronçon T est projeté vers l'arrière, par exemple en raison d'une accélération de l'engin, le tronçon T étend la tige du piston 111 vers l'extérieur (dans le sens de la flèche F), ce qui amène du fluide hydraulique contenu dans la chambre 114 à être expulsé dans l'élément d'amortissement 115, à l'encontre de la force de rappel élastique de ce dernier, ce qui permet d'amortir le mouvement du piston 111 et donc du tronçon T.

Au contraire, lorsque le tronçon T est projeté vers l'avant alors qu'il se trouve en position déployée, par exemple en raison d'un freinage de l'engin, étant donné que le piston 111 est dans sa position totalement rétracté, le tronçon T pousse le vérin de commande 100 dans son ensemble dans le sens opposé à la flèche F, conduisant à un déplacement relatif du piston 121 vers l'intérieur de la chambre 122 dans le sens de la flèche F, ce qui amène du fluide hydraulique contenu dans la chambre 122 à être expulsé dans l'élément d'amortissement 123, à l'encontre de la force de rappel élastique de ce dernier, ce qui permet ainsi d'amortir le mouvement du vérin de commande 100 et donc du tronçon T.

La solution présentée ci-dessous apparaît en théorie satisfaisante. Cependant, en pratique, on a pu observer que le tronçon de rampe T ne reste pas de manière stable dans la position déployée et qu'il a tendance à s'écarter tout seul de la position déployée optimale lorsque l'engin se déplace.

La présente invention vise à proposer une solution permettant de maintenir un tronçon de rampe de pulvérisation de manière stable dans la position déployée, tout en assurant un amortissement en cas d'accélération ou de freinage de l'engin.

Selon la présente invention, cette solution repose sur l'interposition d'un dispositif de régulation hydraulique entre d'un côté la source de fluide sous pression et le réservoir de fluide, et, de l'autre côté, le vérin hydraulique à double effet, en dotant le dispositif de régulation hydraulique de moyens permettant, de manière sélective, d'autoriser ou de couper la communication entre la chambre côté tige du vérin actif et l'élément d'amortissement correspondant, de sorte que le fluide sous pression alimenté dans le vérin actif lors du déploiement ou du repliement n'interfère pas avec l'élément d'amortissement correspondant, ainsi qu'en dimensionnant les éléments d'amortissement pour obtenir un équilibre des pressions dans ladite chambre côté tige du vérin actif et la chambre du vérin passif lorsque le tronçon est dans la position déployée.

La présente invention a ainsi pour objet un dispositif de régulation hydraulique pour un système de commande, avec amortissement, du déploiement et du repliement d'au moins un tronçon de rampe de pulvérisation, ledit système comprenant, pour le ou chaque tronçon, un ensemble vérin hydraulique comprenant d'une part un vérin actif à double effet comportant un piston actif ayant une tige et une tête, la tête séparant une première chambre, côté tête, et une deuxième chambre, côté tige, et, d'autre part, un vérin passif comportant un piston passif dont la tête ferme une troisième chambre séparée de ladite première chambre par une paroi de séparation, le dispositif de régulation hydraulique comprenant des premier et second éléments d'amortissement destinés à être placés en communication avec ladite troisième chambre et ladite deuxième chambre, respectivement,
le dispositif de régulation hydraulique étant caractérisé par le fait qu'il comprend en outre :
- des premier et second moyens d'entrée/sortie de fluide, dit moyens E/S côté alimentation,
- pour le ou chaque ensemble vérin hydraulique :
   - un moyen d'entrée/sortie de fluide côté première chambre, dit moyen E/S côté première chambre, en communication avec le premier moyen E/S côté alimentation et destiné à être relié à ladite première chambre,
   - un moyen d'entrée/sortie de fluide côté deuxième chambre, dit moyen E/S côté deuxième chambre, en communication avec le second moyen E/S côté alimentation et destiné à être relié à ladite deuxième chambre,
   - un moyen d'entrée/sortie de fluide côté troisième chambre, dit moyen E/S côté troisième chambre, relié au premier élément d'amortissement et par lequel ce dernier sera mis en communication avec ladite troisième chambre,
- des premiers moyens distributeurs qui sont, sur un premier côté, reliés aux premier et second moyens E/S côté alimentation et, sur un second côté, destinés à être reliés à une source de fluide à une valeur de pression dite d'alimentation et à un réservoir de fluide, les premiers moyens distributeurs étant actionnables pour :
   - dans une première position, mettre les premier et second moyens E/S côté alimentation en communication avec respectivement la source de fluide et le réservoir de fluide, pour le repliement du tronçon,
   - dans une deuxième position, mettre les premier et second moyens E/S côté alimentation en communication avec respectivement le réservoir de fluide et la source de fluide, pour le déploiement du tronçon, et
   - dans une troisième position, couper la communication entre d'un côté les premier et second moyens E/S côté alimentation et, de l'autre côté, la source de fluide et le réservoir de fluide,
- des deuxièmes moyens distributeurs interposés entre le second élément d'amortissement et le moyen E/S côté deuxième chambre et actionnables pour :
   - dans une première position, couper la communication entre le second élément d'amortissement et le moyen E/S côté deuxième chambre, et
   - dans une seconde position, mettre le second élément d'amortissement en communication avec le moyen E/S côté deuxième chambre,
   et par le fait que les premier et second éléments d'amortissement sont définis pour fournir une pression de fluide respectivement à une première valeur d'amortissement au niveau du moyen E/S côté troisième chambre et à une seconde valeur d'amortissement au niveau du moyen E/S côté deuxième chambre, qui sont telles que le rapport de la première valeur d'amortissement sur la seconde valeur d'amortissement est égal au rapport de la surface de la paroi de séparation séparant lesdites première et troisième chambres sur la surface de la tête, côté tige, du piston actif.

Dans un mode de réalisation particulier du dispositif de régulation hydraulique, pour un système de commande du déploiement et du repliement de deux tronçons de rampe de pulvérisation, le dispositif de régulation hydraulique comprenant ainsi deux moyens E/S côté première chambre, deux moyens E/S côté deuxième chambre, deux moyens E/S côté troisième chambre, et deux deuxièmes moyens distributeurs, les premiers moyens distributeurs sont avantageusement un distributeur 4/3, de préférence un distributeur 4/3 centre fermé, à commande électrique et retour par ressort, normalement fermé.

Dans ce mode de réalisation particulier, de préférence, le premier moyen E/S côté alimentation et chaque moyen E/S côté première chambre sont reliés par une ligne dite d'extension, dans laquelle est interposé un distributeur 2/2, de préférence à commande électrique et retour par ressort, normalement fermé, et/ou le second moyen E/S côté alimentation et chaque moyen E/S côté deuxième chambre sont reliés par une ligne dite de rétractation, dans laquelle est interposé un distributeur 2/2, de préférence à commande électrique et retour par ressort, normalement fermé.

De préférence, le second élément d'amortissement est relié au ou à chaque moyen E/S côté deuxième chambre par une ligne dite d'amortissement dans laquelle est interposé un distributeur 2/2, de préférence à commande électrique et retour par ressort, normalement fermé, et, le cas échéant, la ligne d'amortissement communique avec la ligne de rétractation au niveau d'un point qui se situe entre le moyen E/S côté deuxième chambre et le distributeur 2/2 interposé dans la ligne de rétractation.

De préférence, le second moyen E/S côté alimentation est en communication avec les premier et second éléments d'amortissement, un premier réducteur de pression étant interposé entre le second moyen E/S côté alimentation et le premier élément d'amortissement tandis qu'un second réducteur de pression est interposé entre le second moyen E/S côté alimentation et le second élément d'amortissement, les premier et second réducteurs de pression étant destinés à réduire la pression du fluide de la valeur d'alimentation à la première valeur d'amortissement et à la seconde valeur d'amortissement, respectivement.

De préférence, un clapet anti-retour est interposé entre chaque réducteur de pression et l'élément d'amortissement respectif, les clapets anti-retours s'ouvrant lorsque la pression en sortie du réducteur de pression est supérieure à la pression en aval du clapet anti-retour.

De préférence, la ligne d'amortissement est en communication, au niveau d'un point, avec la sortie du second réducteur de pression, le cas échéant avec la sortie du clapet anti-retour correspondant, l'au moins un distributeur 2/2 interposé dans la ligne d'amortissement étant situé entre le moyen E/S côté deuxième chambre et ledit point au niveau duquel la ligne d'amortissement communique avec la sortie du second réducteur de pression, le cas échéant la sortie du clapet anti-retour correspondant.

De préférence, les premier et second éléments d'amortissement sont des accumulateurs de pression hydraulique.

De préférence, le dispositif de régulation hydraulique est formé par un bloc consistant en une pièce dans laquelle ont été réalisés des forages débouchant au niveau d'orifices sur des surfaces extérieures de ladite pièce, les moyens E/S côté alimentation et les moyens E/S côté première chambre, côté deuxième chambre et côté troisième chambre étant, de préférence, formés par lesdits orifices ou par des raccords montés dans lesdits orifices, tandis que, le cas échéant, les lignes dans lesquelles sont interposés les deuxièmes moyens distributeurs, les distributeurs 2/2, les réducteurs de pression et/ou les clapets anti-retours sont formées par lesdits forages.

La présente invention a également pour objet un système de commande, avec amortissement, du déploiement et du repliement d'au moins un tronçon de rampe de pulvérisation, de préférence de deux tronçons, le système comprenant, pour le ou chaque tronçon, un ensemble vérin hydraulique comprenant d'une part un vérin actif à double effet comportant un piston actif ayant une tige et une tête, la tête séparant une première chambre, côté tête, et une deuxième chambre, côté tige, et, d'autre part, un vérin passif comportant un piston passif dont la tête ferme une troisième chambre séparée de ladite première chambre par une paroi de séparation, le système comprenant en outre une source de fluide à une première valeur de pression dite d'alimentation et un réservoir de fluide, le système étant caractérisé par le fait qu'il comprend un dispositif de régulation hydraulique tel que défini ci-dessus.

Pour mieux illustrer l'objet de la présente invention, on va en décrire ci-après, à titre indicatif et non limitatif, un mode de réalisation préféré avec référence au dessin annexé.

Sur ce dessin :
- la Figure 1 est une vue en perspective d'une partie d'une rampe de pulvérisation et du système d'amortissement selon l'état antérieur de la technique ;
- la Figure 2 est une vue schématique en coupe longitudinale du vérin de commande du système d'amortissement de la Figure 1 ;
- les Figures 3, 4, 5 et 6 sont des schémas hydrauliques du système d'amortissement selon un mode de réalisation préféré de la présente invention, respectivement que l'on déploie les tronçons droit et gauche, lorsque les tronçons droit et gauche sont en position déployée avec amortissement, lorsque l'on replie les tronçons droit et gauche, et lorsque les tronçons droit et gauche sont bloqués en position repliée ;
- les Figures 7 et 8 sont des un schéma hydraulique du système d'amortissement selon le mode de réalisation préféré de la présente invention, respectivement lorsque l'on déploie seulement le tronçon droit et lorsque l'on déploie seulement le tronçon gauche ; et
- les Figures 9, 10 et 11 sont des vues respectivement en perspective de dessus, en perspective de dessous et de face, du bloc d'amortissement du système d'amortissement des Figures 3 à 8.

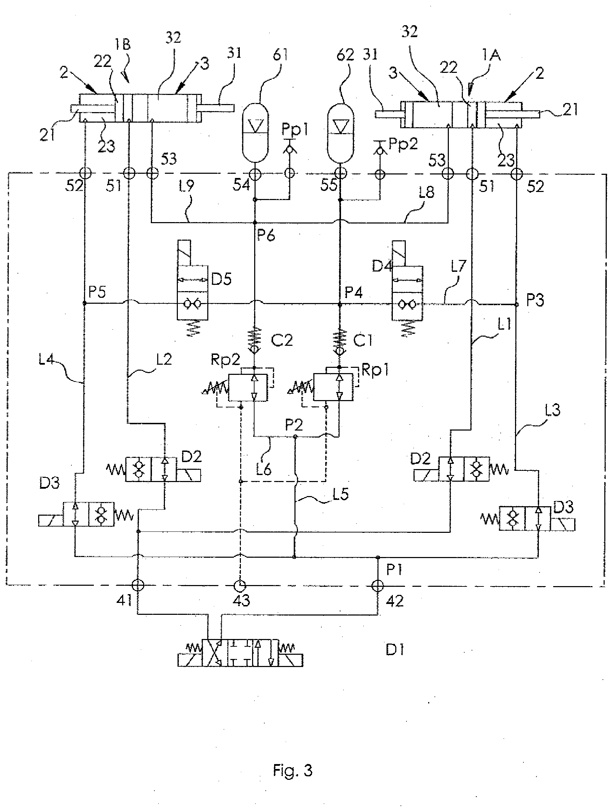

Si l'on se réfère à la Figure 3, on peut voir que le système d'amortissement selon un mode de réalisation préféré de la présente invention est configuré pour la commande et l'amortissement des deux tronçons de rampe (non représenté), à savoir des tronçons droit et gauche dont les déplacements sont commandés par un ensemble vérin hydraulique respectivement 1A et 1B.

Chaque ensemble vérin hydraulique 1A et 1B est analogue au vérin de commande 100 du brevet français FR 2 891 110 B1 décrit ci-dessus, et consiste ainsi en un vérin hydraulique à double effet comprenant un vérin actif 2 et un vérin passif 3. Le vérin actif 2 a un piston 21 dont la tige est solidaire du tronçon de rampe et s'étend donc hors du corps de vérin, et le piston 21 définit dans le corps de vérin une première chambre 22, côté piston, et une deuxième chambre 23, côté tige. Le vérin passif 3 comporte un piston 31 dont la tige est solidaire du support sur lequel est monté à rotation le tronçon de rampe, laquelle tige s'étend donc hors du corps de vérin, et le piston 31 définit dans le corps de vérin une troisième chambre 32, côté piston, séparée de la première chambre 22.

Selon la présente invention, chacune des première, deuxième et troisième chambres 22, 23 et 32 comporte des moyens d'entrée/sortie de fluide hydraulique destinés à être relié à un dispositif de régulation hydraulique selon la présente invention.

Selon le mode de réalisation préféré de la présente invention, le dispositif de régulation hydraulique comprend :
- deux moyens d'entrée/sortie de fluide hydraulique, désignés ci-après par moyens E/S côté alimentation 41 et 42, destinés à être reliées à une source de fluide hydraulique sous pression et à un moyen de récupération de fluide hydraulique,
- un moyen d'entrée/sortie de fluide hydraulique destiné à être relié à un drain, ci-après désigné par moyen E/S côté drain 43,
- deux moyens d'entrée/sortie de fluide hydraulique destinés à être reliés respectivement à la première chambre 22 d'un vérin actif 2 respectif, lesquels moyens sont désignés ci-après par moyens E/S côté première chambre 51,
- deux moyens d'entrée/sortie de fluide hydraulique destinés à être reliés respectivement à la deuxième chambre 23 d'un vérin actif 2 respectif, lesquels moyens sont désignés ci-après par moyens E/S côté deuxième chambre 52,
- deux moyens d'entrée/sortie de fluide hydraulique destinés à être reliés respectivement à la troisième chambre 32 d'un vérin passif 3 respectif, lesquels moyens sont désignés ci-après par moyens E/S côté troisième chambre 53, et
- deux moyens d'entrée/sortie de fluide hydraulique, l'un destiné à être relié à un premier accumulateur 61 et l'autre destiné à être relié à un second accumulateur 62, lesquels moyens sont désignés ci-après respectivement par moyens E/S côté premier accumulateur 54 et par moyens E/S côté second accumulateur 55.

Dans l'exemple illustré, la source de fluide hydraulique sous pression délivre un fluide hydraulique à 20 MPa (200 bars), et les premier et second accumulateurs 61, 62 sont des accumulateurs sous pression de gaz respectivement à une pression de 4 MPa (40 bars) et 8 MPa (80 bars), et constituent les éléments d'amortissement du dispositif de régulation hydraulique. La source de fluide hydraulique sous pression peut, par exemple, consister en un réservoir de fluide auquel est associé tout système de compression hydraulique approprié, comme par exemple une pompe.

Un distributeur D1 4/3 (quatre positions, trois orifices) centre fermé, à commande électrique et retour par ressort, normalement fermé, est interposé entre, d'une part, les moyens E/S côté alimentation 41 et 42 et, d'autre part, la source de fluide hydraulique sous pression et le moyen de récupération de fluide hydraulique, tous deux non représentés.

Les moyens de récupération de fluide hydraulique sont le drain, par exemple un simple réservoir de fluide, à partir duquel le fluide peut être récupéré et mis sous pression pour alimentation des ensembles vérins hydrauliques 1A, 1B.

Le moyen E/S côté alimentation 41 est relié par une première ligne L1 à celui des moyens E/S côté première chambre 51 qui sera relié au vérin de commande 1A et par une deuxième ligne L2 à l'autre des moyens E/S côté première chambre 51. Un distributeur D2 2/2 à commande électrique et retour par ressort, normalement fermé, est interposé sur chacune de la première ligne L1 et de la deuxième ligne L2. Les première et deuxième lignes L1 et L2 sont des lignes dites d'extension.

Le moyen E/S côté alimentation 42 est relié par une troisième ligne L3 à celui des moyens E/S côté deuxième chambre 52 qui sera relié au vérin de commande 1A et par une quatrième ligne L4 à l'autre des moyens E/S côté deuxième chambre 52. Un distributeur D3 2/2 à commande électrique et retour par ressort, normalement fermé, est interposé sur chacune de la troisième ligne L3 et de la quatrième ligne L4. Les troisième et quatrième lignes L3 et L4 sont des lignes dites de rétractation.

Le moyen E/S côté alimentation 42 est également relié par une cinquième ligne L5 au moyen E/S côté second accumulateur 55. Un réducteur de pression Rp2, dit second réducteur de pression, de type à action directe, et un clapet anti-retour avec ressort taré C2 sont interposés sur la cinquième ligne L5, dans cet ordre à partir du moyen E/S côté alimentation 42. Le second réducteur de pression Rp2 est configuré pour réduire une pression de 20 MPa en entrée en une pression de 8 MPa en sortie.

Le moyen E/S côté alimentation 42 est également relié par une sixième ligne L6 au moyen E/S côté premier accumulateur 54. Un réducteur de pression Rp1, dit premier réducteur de pression, de type à action directe, et un clapet anti-retour avec ressort taré C1 sont interposés sur la sixième ligne L6, dans cet ordre à partir du moyen E/S côté alimentation 42. Le premier réducteur de pression Rp1 est configuré pour réduire une pression de 20 MPa en entrée en une pression de 4 MPa en sortie.

Les premier et second réducteurs de pression Rp1 et Rp2 sont également reliés au moyen E/S de drain 43.

Les premier et second réducteurs de pression Rp1 et Rp2 permettent de garantir que les pressions fournies par les accumulateurs 61 et 62 sont bien les pressions souhaitées.

En particulier, les troisième, quatrième et cinquième lignes L3, L4 et L5 commencent à partir d'un même point P1, et la sixième ligne L6 s'étend à partir de la cinquième ligne L5 en un point P2 en aval du point P1 si l'on considère un sens d'écoulement à partir du moyen E/S côté alimentation 42.

De plus, une septième ligne L7, qui constitue la ligne d'amortissement, relie les troisième, quatrième et cinquième lignes L3, L4 et L5 en aval des distributeurs D3 et du clapet C1, un distributeur D4 2/2 à commande électrique et retour par ressort, normalement fermé, étant interposé entre le point P3 où la troisième ligne L3 et la septième ligne L7 communiquent et le point P4 où la septième ligne L7 et la cinquième ligne L5 communiquent, tandis qu'un distributeur D5 2/2 à commande électrique et retour par ressort, normalement fermé, est interposé entre le point P4 et le point P5 où la septième ligne L7 et la quatrième ligne L4 communiquent.

En aval du point P4, la cinquième ligne L5 arrive au moyen E/S côté second accumulateur 55.

Une huitième ligne L8 et une neuvième ligne L9 s'étendent à partir d'un point P6 sur la sixième ligne L6, en aval du clapet C2, et elles arrivent respectivement au moyen E/S côté troisième chambre 53 pour le vérin de commande 1A et au moyen E/S côté troisième chambre 53 pour le vérin de commande 1B.

Enfin, des prises de pression Pp1 et Pp2 sont prévues respectivement pour le premier accumulateur 61 et le second accumulateur 62, pour le contrôle de la pression d'amortissement qu'ils fournissent.

Si l'on se réfère en particulier à la Figure 3, on peut voir que lorsque l'on souhaite déployer les tronçons droit et gauche à partir de la position repliée, et ainsi actionner les vérins de commande 1A et 1B pour rentrer la tige du piston 21 vers l'intérieur du corps de vérin, les différents distributeurs sont placés dans les positions suivantes :
- distributeur D1 : position ouvert à gauche, le moyen E/S côté alimentation 41 est en communication avec le drain et le moyen E/S côté alimentation 42 est en communication avec la source de fluide sous pression ;
- distributeurs D2 sur les première et deuxième lignes L1 et L2 sont en position ouvert ;
- distributeurs D3 sur les troisième et quatrième lignes L3 et L4 sont en position ouvert ; et
- distributeurs D4 et D5 sur la septième ligne L7 sont en position fermé.

Ainsi, le fluide sous pression entre, en passant par le moyen E/S côté alimentation 42, dans les troisième et quatrième lignes L3 et L4 où il s'écoule jusqu'aux moyens E/S côté deuxième chambre 52, à partir desquels il entre dans la deuxième chambre 23 de chacun des vérins actifs 2, forçant les pistons 21 à rentrer dans les corps de vérin, faisant ainsi tourner les tronçons de rampe vers l'avant, en direction de la position déployée. Le mouvement des pistons 21 vers l'intérieur dans les corps de vérin amène le fluide hydraulique qui était présent dans les premières chambres 22 à être expulsé vers les moyens E/S côté première chambre 51, puis à s'écouler dans respectivement les première et deuxième lignes L1 et L2 jusqu'au moyen E/S côté alimentation 41, à partir duquel il s'écoule jusqu'au drain du fait de la position du distributeur D1.

Le fluide sous pression à 20 MPa s'écoule dans les cinquième et sixième lignes L5 et L6 jusqu'aux réducteurs de pression Rp1 et Rp2, où la pression est réduite respectivement à 4 MPa et 8 MPa, pour correspondre à la pression des premier et second accumulateurs 61 et 62. Les clapets anti-retour C1 et C2 empêchent le fluide provenant des premier et second accumulateurs 61 et 62 d'atteindre les réducteurs de pression Rp1 et Rp2.

Les distributeurs D4 et D5 sont en position fermé et empêchent donc toute communication entre d'un côté la cinquième ligne L5 et d'un autre côté les troisième et quatrième lignes L3 et L4, de sorte que le fluide sous pression s'écoulant dans les troisième et quatrième lignes L3 et L4 ne peut pas rejoindre le point P4 sur la cinquième ligne L5 et le second accumulateur 62 ne communique pas avec les troisième et quatrième lignes L3 et L4.

Le premier accumulateur 61 est quant à lui en communication avec les troisièmes chambres 32 des deux vérins passifs 3.

En résumé, lorsque l'on souhaite ouvrir les tronçons droit et gauche, du fluide hydraulique à 20 MPa est introduit dans les deuxièmes chambres 23 et du fluide hydraulique à 4 MPa se situe dans la troisième chambre 32.

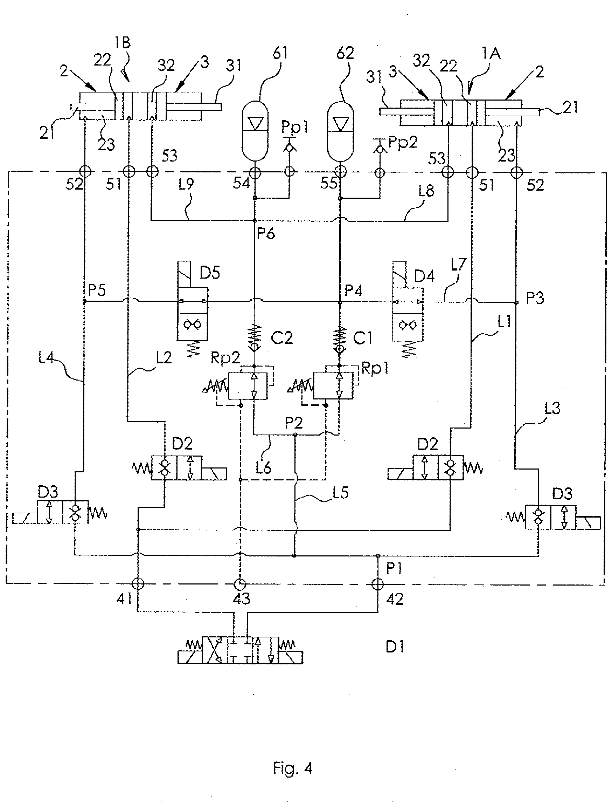

Une fois les tronçons droit et gauche arrivés à la position déployée, les différents distributeurs sont automatiquement commandés, par exemple par des capteurs de fin de course mécaniques associés aux tronçons, pour être placés dans les positions suivantes, comme on peut le voir sur la Figure 4 :
- distributeur D1 : position fermé au centre, la communication entre d'un côté les moyens E/S côté alimentation 41 et 42 et, d'un autre côté, le drain et la source de fluide sous pression est interrompue ;
- distributeurs D2 sur les première et deuxième lignes L1 et L2 sont en position fermé ;
- distributeurs D3 sur les troisième et quatrième lignes L3 et L4 sont en position fermé ; et
- distributeurs D4 et D5 sur la septième ligne L7 sont en position ouvert.

Dans cette configuration des différents distributeurs, les premières chambres 22 ne sont plus sous pression comme suite au mouvement des pistons 21, les deuxièmes chambres 23 sont en communication, via les distributeurs D4 et D5 et la ligne L7, avec le second accumulateur 62 et sont donc sous une pression de 8 MPa, et la troisième chambre 32 est en communication avec le premier accumulateur 61 et est donc sous une pression de 4 MPa.

On souligne ici que les pistons 21, dans l'exemple choisi dans lequel la pression d'amortissement fournie par le premier accumulateur 61 est égale à la moitié de la pression d'amortissement fournie par le second accumulateur 62, sont dimensionnés pour offrir une surface côté tige qui soit égale à la moitié de la surface de la paroi séparant la première chambre 22 et la troisième chambre 32.

Ainsi, ladite paroi est soumise de chaque côté à une même force, de sorte que chaque ensemble vérin hydraulique 1A et 1B est à l'équilibre.

On comprendra aisément que si un tronçon est projeté vers l'arrière (donc en direction de la position repliée), par exemple en cas d'accélération de l'engin, alors le tronçon cherchera à déplacer le piston 21 hors de l'ensemble vérin hydraulique 1A, 1B respectif, mais que le fluide hydraulique présent dans la deuxième chambre 23 s'opposera à ce déplacement du piston 21, sans toutefois produire une force de rappel élastique supérieure à celle produite par le fluide hydraulique présent dans la troisième chambre 32, de sorte que l'ensemble vérin hydraulique 1A, 1B respectif reviendra à la position d'équilibre, illustrée sur la Figure 4, sans « rebond » comme dans l'état antérieur de la technique.

De la même manière, si un tronçon est projeté vers l'avant, par exemple en cas de freinage de l'engin, alors comme dans l'état antérieur de la technique, le tronçon cherchera à déplacer l'ensemble vérin hydraulique 1A, 1B dans son ensemble en direction du support solidaire de l'engin, et donc à déplacer le piston 31 vers l'intérieur de la troisième chambre 32, mais le fluide hydraulique présent dans la troisième chambre 32 s'opposera à ce déplacement du piston 31, sans toutefois produire une force de rappel élastique supérieure à celle produite par le fluide hydraulique présent dans la deuxième chambre 23, de sorte que l'ensemble vérin hydraulique 1A, 1B respectif reviendra à la position d'équilibre illustrée sur la Figure 4, là encore sans « rebond ».

Bien entendu, la présente invention n'est pas limité aux exemples de valeurs indiquées ci-dessus pour les pressions : l'amortissement sans rebond pourra être obtenu en prévoyant que le rapport de la pression d'amortissement fournie par le premier accumulateur 61 à la pression d'amortissement fournie par le second accumulateur 62 est égal au rapport de la surface offerte par le piston 21, côté tige, à la surface de la paroi de séparation séparant la première chambre 22 et la troisième chambre 32.

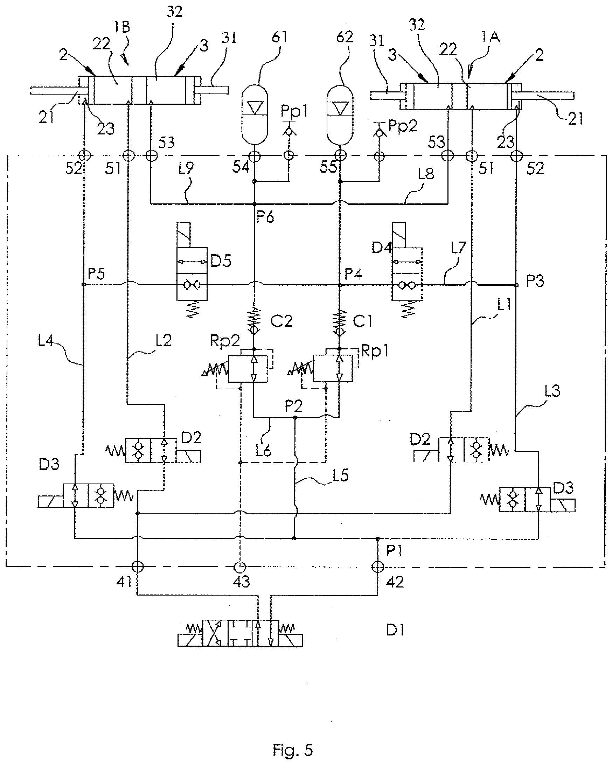

Si l'on souhaite ramener les tronçons droit et gauche dans la position repliée, les différents distributeurs sont placés dans les positions suivantes, comme on peut le voir sur la Figure 5 :
- distributeur D1 : position ouvert à droite, le moyen E/S côté alimentation 41 est en communication avec la source de fluide sous pression et le moyen E/S côté alimentation 42 est en communication avec le drain ;
- distributeurs D2 sur les première et deuxième lignes L1 et L2 sont en position ouvert ;
- distributeurs D3 sur les troisième et quatrième lignes L3 et L4 sont en position ouvert ; et
- distributeurs D4 et D5 sur la septième ligne L7 sont en position fermé.

En d'autres termes, la seule différence avec les positions pour déploiement des tronçons est la position du distributeur D1. On comprendra aisément que cette fois-ci le fluide sous pression à 20 MPa entre dans les première et deuxième lignes L1 et L2 où il s'écoule jusqu'aux moyens E/S côté première chambre 51, à partir desquels il entre dans la première chambre 22 de chacun des vérins actifs 2, forçant les pistons 21 à sortir des corps de vérin, faisant ainsi tourner les tronçons de rampe vers l'arrière, en direction de la position repliée. Le mouvement des pistons 21 vers l'extérieur amène le fluide hydraulique à 8 MPa qui était présent dans les deuxièmes chambres 23 à être expulsé vers les moyens E/S côté deuxième chambre 52, puis à s'écouler dans respectivement les troisième et quatrième lignes L3 et L4 jusqu'au moyen E/S côté alimentation 42, à partir duquel il s'écoule jusqu'au drain du fait de la position du distributeur D1. Les troisièmes chambres 32 restent sous pression à 4 MPa.

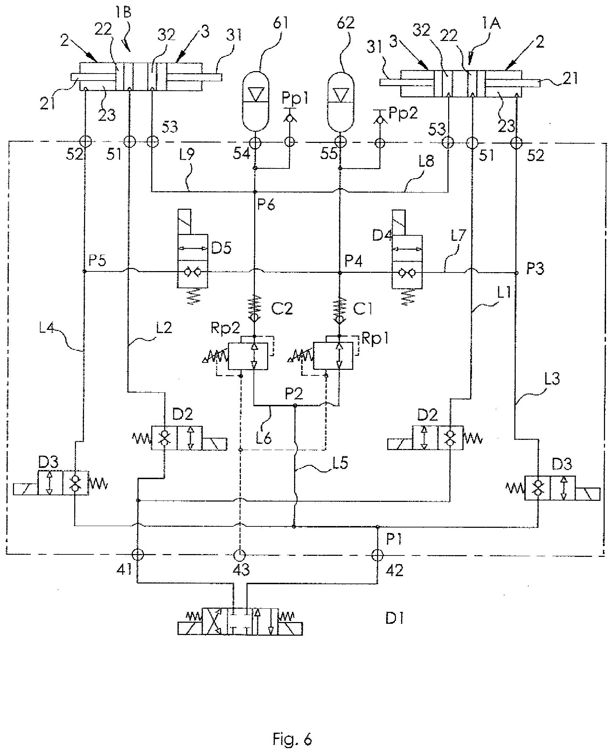

Une fois les tronçons droit et gauche arrivés à la position repliée, les différents distributeurs sont automatiquement commandés, par exemple également par des capteurs de fin de course mécaniques associés aux tronçons, pour être placés dans les positions suivantes, comme on peut le voir sur la Figure 6 :
- distributeur D1 : position fermé au centre, la communication entre d'un côté les moyens E/S côté alimentation 41 et 42 et, d'un autre côté, le drain et la source de fluide sous pression est interrompue ;
- distributeurs D2 sur les première et deuxième lignes L1 et L2 sont en position fermé ;
- distributeurs D3 sur les troisième et quatrième lignes L3 et L4 sont en position fermé ; et
- distributeurs D4 et D5 sur la septième ligne L7 sont en position fermé.

En d'autres termes, tous les distributeurs sont fermés, de sorte que les premières chambres 22 sont sous une pression de 20 MPa comme suite au repliement des tronçons et les troisièmes chambres 32 sont sous une pression de 4 MPa du fait de leur communication avec le premier accumulateur 61, de sorte que les tronçons sont bloqués dans la position repliée par la pression des premières chambres 22.

On constate donc que le dispositif de régulation hydraulique selon la présente invention permet à la fois d'assurer le déploiement et le repliement des tronçons, et d'assurer un amortissement des tronçons dans la position déployée tout en les maintenant de manière stable dans cette position déployée.

On souligne ici que le dispositif de régulation hydraulique tel que décrit ci-dessus permet de commander les tronçons indépendamment l'un de l'autre, en commande l'ouverture ou la fermeture des différents distributeurs.

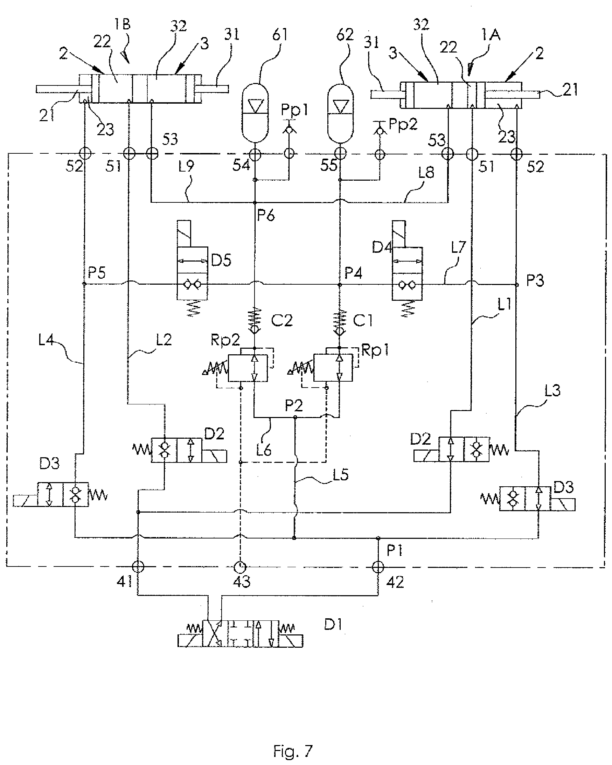

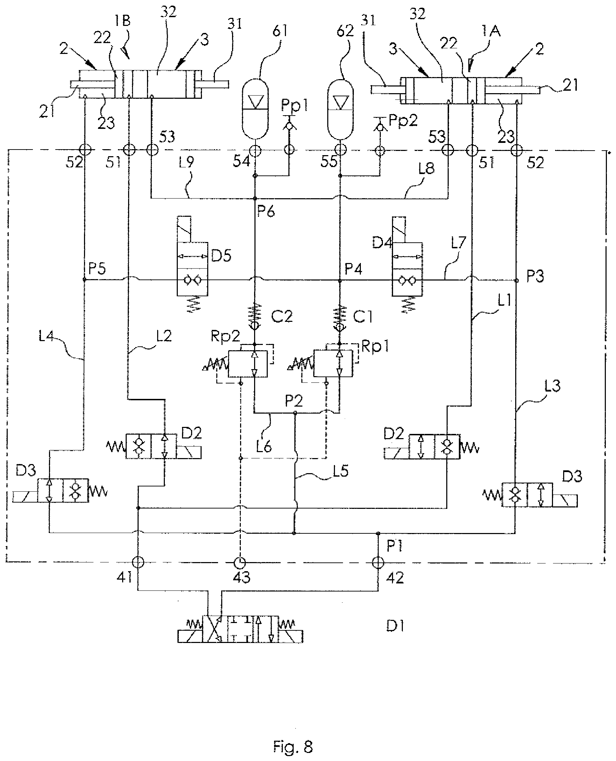

Par exemple, si l'on souhaite déployer seulement un tronçon, il suffit de placer le distributeur D1 en position ouvert à gauche et de placer les distributeurs D2 et D3 en position ouverte sur les lignes menant au vérin de commande respectif. Ainsi, si l'on souhaite déployer le tronçon droit, les distributeurs D2 et D3 sur les première et troisième lignes L1 et L3 seront en position ouvert comme on peut le voir sur la Figure 7, et si l'on souhaite déployer le tronçon gauche ce sont les distributeurs D2 et D3 sur les deuxième et quatrième lignes L2 et L4 qui seront en position ouvert (Figure 8).

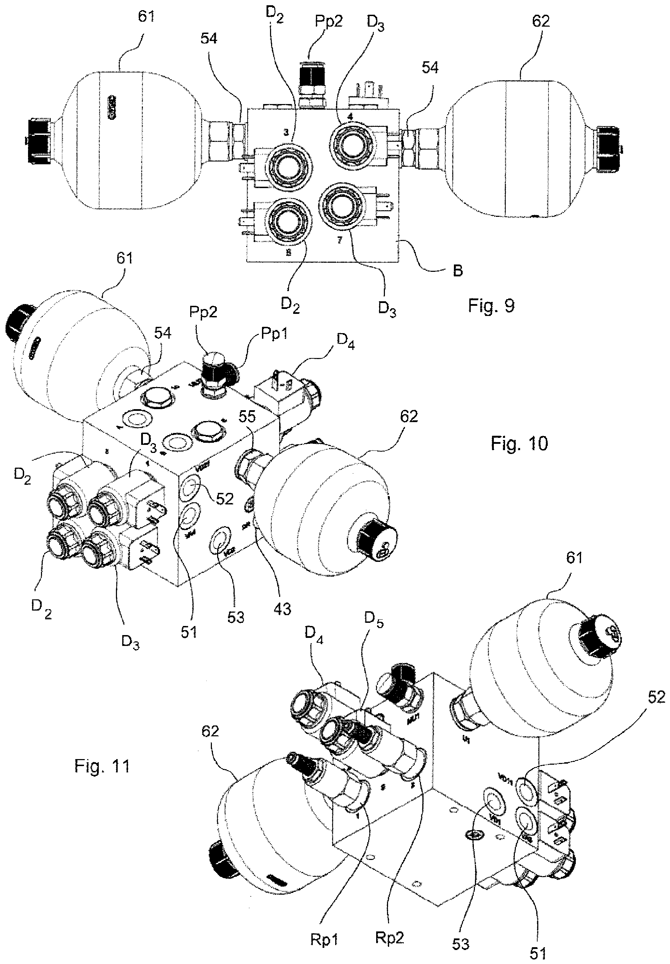

Si l'on se réfère maintenant aux Figures 9 à 11, on peut voir que le dispositif de régulation hydraulique selon le mode de réalisation préféré de la présente invention peut être mis en œuvre par un bloc foré B, se présentant sous la forme d'une pièce parallélépipédique dans laquelle des forages ont été réalisés de façon à former les différentes lignes mentionnées ci-dessus et sur laquelle sont montés les différents distributeurs, réducteurs de pression et clapets.

Sur les Figures 9 à 11, on a désigné avec les signes de référence utilisés sur les schémas hydrauliques, les parties visibles des composants hydrauliques. Ainsi, par exemple, les solénoïdes de commande des distributeurs D1 à D5 ont été désignés également par D1, D2, D3, D4 et D5.

Sur ces figures, on peut noter que les moyens E/S 41, 42, 43, 51, 52, 53, 54, 55 peuvent consister, par exemple, en des orifices susceptibles d'être raccordés par tout moyen approprié, comme par exemple par des tuyaux flexibles, aux moyens d'entrée/sortie des ensembles vérins hydrauliques 1A, 1B, ou en des raccords, comme par exemple pour les premier et second accumulateurs 61, 62.

Une telle mise en œuvre du dispositif hydraulique sous la forme d'un bloc foré permet une installation très aisée et rapide sur des engins existants comportant des ensembles vérins hydrauliques analogues à ceux décrits ci-dessus.

Il est bien entendu que le mode de réalisation préféré qui vient d'être décrit a été donné à titre indicatif et non limitatif et que des modifications peuvent être apportées sans que l'on s'écarte pour autant du cadre de la présente invention.

## Revendications

1. Dispositif de régulation hydraulique pour un système de commande, avec amortissement, du déploiement et du repliement d'au moins un tronçon de rampe de pulvérisation, ledit système comprenant, pour le ou chaque tronçon, un ensemble vérin hydraulique (1A, 1B) comprenant d'une part un vérin actif à double effet (2) comportant un piston actif (21) ayant une tige et une tête, la tête séparant une première chambre (22), côté tête, et une deuxième chambre (23), côté tige, et, d'autre part, un vérin passif (3) comportant un piston passif (31) dont la tête ferme une troisième chambre (32) séparée de ladite première chambre (22) par une paroi de séparation, le dispositif de régulation hydraulique comprenant des premier et second éléments d'amortissement (61) destinés à être placés en communication avec ladite troisième chambre (32) et ladite deuxième chambre (23), respectivement,
le dispositif de régulation hydraulique étant **caractérisé par le fait qu'**il comprend en outre :
- des premier et second moyens d'entrée/sortie de fluide, dit moyens E/S côté alimentation (41, 42),
- pour le ou chaque ensemble vérin hydraulique (1A, 1B) :
- un moyen d'entrée/sortie de fluide côté première chambre, dit moyen E/S côté première chambre (51), en communication avec le premier moyen E/S côté alimentation (41) et destiné à être relié à ladite première chambre (22),
- un moyen d'entrée/sortie de fluide côté deuxième chambre, dit moyen E/S côté deuxième chambre (52), en communication avec le second moyen E/S côté alimentation (42) et destiné à être relié à ladite deuxième chambre (23),
- un moyen d'entrée/sortie de fluide côté troisième chambre, dit moyen E/S côté troisième chambre (53), relié au premier élément d'amortissement (61) et par lequel ce dernier sera mis en communication avec ladite troisième chambre (32),
- des premiers moyens distributeurs (D1) qui sont, sur un premier côté, reliés aux premier et second moyens E/S côté alimentation (41, 42) et, sur un second côté, destinés à être reliés à une source de fluide à une valeur de pression dite d'alimentation et à un réservoir de fluide, les premiers moyens distributeurs (D1) étant actionnables pour :
- dans une première position, mettre les premier et second moyens E/S côté alimentation (41, 42) en communication avec respectivement la source de fluide et le réservoir de fluide, pour le repliement du tronçon,
- dans une deuxième position, mettre les premier et second moyens E/S côté alimentation (41, 42) en communication avec respectivement le réservoir de fluide et la source de fluide, pour le déploiement du tronçon, et
- dans une troisième position, couper la communication entre d'un côté les premier et second moyens E/S côté alimentation (41, 42) et, de l'autre côté, la source de fluide et le réservoir de fluide,
- des deuxièmes moyens distributeurs (D4, D5) interposés entre le second élément d'amortissement (62) et le moyen E/S côté deuxième chambre (52) et actionnables pour :
- dans une première position, couper la communication entre le second élément d'amortissement (62) et le moyen E/S côté deuxième chambre (52), et
- dans une seconde position, mettre le second élément d'amortissement (62) en communication avec le moyen E/S côté deuxième chambre (52),
et **par le fait que** les premier et second éléments d'amortissement (61, 62) sont définis pour fournir une pression de fluide respectivement à une première valeur d'amortissement au niveau du moyen E/S côté troisième chambre (53) et à une seconde valeur d'amortissement au niveau du moyen E/S côté deuxième chambre (52), qui sont telles que le rapport de la première valeur d'amortissement sur la seconde valeur d'amortissement est égal au rapport de la surface de la paroi de séparation séparant lesdites première et troisième chambres (22, 32) sur la surface de la tête, côté tige, du piston actif (21).

2. Dispositif de régulation hydraulique selon la revendication 1, pour un système de commande du déploiement et du repliement de deux tronçons de rampe de pulvérisation, le dispositif de régulation hydraulique comprenant ainsi deux moyens E/S côté première chambre (51), deux moyens E/S côté deuxième chambre (52), deux moyens E/S côté troisième chambre (53), et deux deuxièmes moyens distributeurs (D4, D5), **caractérisé par le fait que** les premiers moyens distributeurs (D1) sont un distributeur 4/3, de préférence un distributeur 4/3 centre fermé, à commande électrique et retour par ressort, normalement fermé.

3. Dispositif de régulation hydraulique selon la revendication 2, **caractérisé par le fait que** le premier moyen E/S côté alimentation (41) et chaque moyen E/S côté première chambre (51) sont reliés par une ligne dite d'extension (L1, L2), dans laquelle est interposé un distributeur 2/2 (D2), de préférence à commande électrique et retour par ressort, normalement fermé, et **par le fait que** le second moyen E/S côté alimentation (42) et chaque moyen E/S côté deuxième chambre (52) sont reliés par une ligne dite de rétractation (L3, L4), dans laquelle est interposé un distributeur 2/2 (D3), de préférence à commande électrique et retour par ressort, normalement fermé.

4. Dispositif de régulation hydraulique selon l'une quelconque des revendications 1 à 3, **caractérisé par le fait que** le second élément d'amortissement (62) est relié au ou à chaque moyen E/S côté deuxième chambre (52) par une ligne dite d'amortissement (L7) dans laquelle est interposé un distributeur 2/2 (D4, D5), de préférence à commande électrique et retour par ressort, normalement fermé, et, le cas échéant, la ligne d'amortissement (L7) communique avec la ligne de rétractation (L3, L4) au niveau d'un point (P3, P5) qui se situe entre le moyen E/S côté deuxième chambre (52) et le distributeur 2/2 (D3) interposé dans la ligne de rétractation (L3, L4).

5. Dispositif de régulation hydraulique selon l'une quelconque des revendications 1 à 4, **caractérisé par le fait que** le second moyen E/S côté alimentation (42) est en communication avec les premier et second éléments d'amortissement (61, 62), un premier réducteur de pression (Rp1, Rp2) étant interposé entre le second moyen E/S côté alimentation (42) et le premier élément d'amortissement (61) tandis qu'un second réducteur de pression (Rp2) est interposé entre le second moyen E/S côté alimentation (42) et le second élément d'amortissement (62), les premier et second réducteurs de pression (Rp1, Rp2) étant destinés à réduire la pression du fluide de la valeur d'alimentation à la première valeur d'amortissement et à la seconde valeur d'amortissement, respectivement.

6. Dispositif de régulation hydraulique selon la revendication 5, **caractérisé par le fait qu'**un clapet anti-retour (C1, C2) est interposé entre chaque réducteur de pression (Rp1, Rp2) et l'élément d'amortissement (61, 62) respectif, les clapets anti-retours (C1, C2) s'ouvrant lorsque la pression en sortie du réducteur de pression (Rp1, Rp2) est supérieure à la pression en aval du clapet anti-retour (C1, C2).

7. Dispositif de régulation hydraulique selon l'une des revendications 5 et 6 lorsque prises en dépendance de la revendication 4, **caractérisé par le fait que** la ligne d'amortissement (L7) est en communication, au niveau d'un point (P4), avec la sortie du second réducteur de pression (Rp2), le cas échéant avec la sortie du clapet anti-retour (C2) correspondant, l'au moins un distributeur 2/2 (D4) interposé dans la ligne d'amortissement (L7) étant situé entre le moyen E/S côté deuxième chambre (52) et ledit point (P4) au niveau duquel la ligne d'amortissement (7) communique avec la sortie du second réducteur de pression (Rp2), le cas échéant la sortie du clapet anti-retour (C2) correspondant.

8. Dispositif de régulation hydraulique selon l'une quelconque des revendications 1 à 7, **caractérisé par le fait que** les premier et second éléments d'amortissement (61, 62) sont des accumulateurs de pression hydraulique.

9. Dispositif de régulation hydraulique selon l'une quelconque des revendications 1 à 8, **caractérisé par le fait qu'**il est formé par un bloc (B) consistant en une pièce dans laquelle ont été réalisés des forages débouchant au niveau d'orifices sur des surfaces extérieures de ladite pièce, les moyens E/S côté alimentation (41, 42) et les moyens E/S côté première chambre (51), côté deuxième chambre (52) et côté troisième chambre (53) étant, de préférence, formés par lesdits orifices ou par des raccords montés dans lesdits orifices, tandis que, le cas échéant, les lignes dans lesquelles sont interposés les deuxièmes moyens distributeurs (D4, D5), les distributeurs 2/2 (D2, D3), les réducteurs de pression (Rp1, Rp2) et/ou les clapets anti-retours (C1, C2) sont formées par lesdits forages.

10. Système de commande, avec amortissement, du déploiement et du repliement d'au moins un tronçon de rampe de pulvérisation, de préférence de deux tronçons, le système comprenant, pour le ou chaque tronçon, un ensemble vérin hydraulique (1A, 1B) comprenant d'une part un vérin actif à double effet (2) comportant un piston actif (21) ayant une tige et une tête, la tête séparant une première chambre (22), côté tête, et une deuxième chambre (23), côté tige, et, d'autre part, un vérin passif (3) comportant un piston passif (31) dont la tête ferme une troisième chambre (32) séparée de ladite première chambre (22) par une paroi de séparation, le système comprenant en outre une source de fluide à une première valeur de pression dite d'alimentation et un réservoir de fluide, le système étant **caractérisé par le fait qu'**il comprend un dispositif de régulation hydraulique tel que défini à l'une quelconque des revendications 1 à 9.

## Patentansprüche

1. Hydraulische Regulierungsvorrichtung für ein Steuersystem mit Dämpfung des Ausfahrens und des Einfahrens von mindestens einem Sprühbalkenabschnitt, wobei das System für den oder jeden Abschnitt eine Hydraulikzylindereinheit (1A, 1B) umfasst, umfassend zum einen einen aktiven Doppeleffektzylinder (2), einen aktiven Kolben (21) mit einer Stange und einem Kopf aufweisend, wobei der Kopf eine erste Kammer (22) kopfseitig und eine zweite Kammer (23) stangenseitig trennt, und zum anderen einen passiven Zylinder (3), einen passiven Kolben (31) aufweisend, dessen Kopf eine dritte Kammer (32) schließt, die von der ersten Kammer (22) durch eine Trennwand getrennt ist, wobei die hydraulische Regulierungsvorrichtung ein erstes und zweites Dämpfungselement (61) umfasst, die zur Platzierung in Kommunikation mit der jeweils der dritten Kammer (32) und der zweiten Kammer (23) bestimmt sind,
wobei die hydraulische Regulierungsvorrichtung **dadurch gekennzeichnet ist, dass** sie ferner umfasst:
- ein erstes und zweites Fluid-Einlass-/Auslassmittel, bezeichnet als versorgungsseitige E/A-Mittel (41, 42),
- für die oder jede Hydraulikzylindereinheit (1A, 1B):
- ein erstkammerseitiges Fluid-Einlass-/Auslassmittel, bezeichnet als erstkammerseitiges E/A-Mittel (51) in Kommunikation mit dem versorgungsseitigen ersten E/A-Mittel (41) und bestimmt, mit der ersten Kammer (22) verbunden zu sein,
- ein zweitkammerseitiges Fluid-Einlass-/Auslassmittel, bezeichnet als zweitkammerseitiges E/A-Mittel (52) in Kommunikation mit dem versorgungsseitigen zweiten E/A-Mittel (42) und bestimmt, mit der zweiten Kammer (23) verbunden zu sein,
- ein drittkammerseitiges Fluid-Einlass-/Auslassmittel, bezeichnet als drittkammerseitiges E/A-Mittel (53), das mit dem ersten Dämpfungselement (61) verbunden ist und durch welches dieses Letztere mit der dritten Kammer (32) in Kommunikation versetzt wird,
- erste Verteilermittel (D1), die auf einer ersten Seite mit dem versorgungsseitigen ersten und zweiten E/A-Mittel (41, 42) verbunden sind und auf einer zweiten Seite bestimmt sind, mit einer Fluidquelle mit einem als Versorgungsdruckwert bezeichneten Druckwert und mit einem Fluidvorratsbehälter verbunden zu sein, wobei die ersten Verteilermittel (D1) betätigbar sind, um:
- in einer ersten Position das versorgungsseitige erste und zweite E/A-Mittel (41, 42) mit jeweils der Fluidquelle und dem Fluidvorratsbehälter für das Einfahren des Abschnitts in Kommunikation zu versetzen,
- in einer zweiten Position das versorgungsseitige erste und zweite E/A-Mittel (41, 42) mit jeweils dem Fluidvorratsbehälter und der Fluidquelle für das Ausfahren des Abschnitts in Kommunikation zu versetzen, und
- in einer dritten Position die Kommunikation zwischen auf der einen Seite dem versorgungsseitigen ersten und zweiten E/A-Mittel (41, 42) und auf der anderen Seite der Fluidquelle und dem Fluidvorratsbehälter zu unterbrechen,
- zweite Verteilermittel (D4, D5), die zwischen dem zweiten Dämpfungselement (62) und dem zweitkammerseitigen E/A-Mittel (52) zwischengestellt und betätigbar sind, um:
- in einer ersten Position die Kommunikation zwischen dem zweiten Dämpfungselement (62) und dem zweitkammerseitigen E/A-Mittel (52) zu unterbrechen, und
- in einer zweiten Position das zweite Dämpfungselement (62) mit dem zweitkammerseitigen E/A-Mittel (52) in Kommunikation zu versetzen,
und dadurch, dass das erste und zweite Dämpfungselement (61, 62) festgelegt sind, um einen Fluiddruck jeweils mit einem ersten Dämpfungswert im Bereich des drittkammerseitigen E/A-Mittels (53) und mit einem zweiten Dämpfungswert im Bereich des zweitkammerseitigen E/A-Mittels (52) bereitzustellen, die derart sind, dass das Verhältnis des ersten Dämpfungswerts zum zweiten Dämpfungswert gleich dem Verhältnis der Oberfläche der Trennwand, die die erste und dritte Kammer (22, 32) trennt, zur Oberfläche des Kopfs stangenseitig des aktiven Kolbens (21) ist.

2. Hydraulische Regulierungsvorrichtung nach Anspruch 1 für ein Steuersystem des Ausfahrens und des Einfahrens von zwei Sprühbalkenabschnitten, wobei die hydraulische Regulierungsvorrichtung somit zwei erstkammerseitige E/A-Mittel (51), zwei zweitkammerseitige E/A-Mittel (52), zwei drittkammerseitige E/A-Mittel (53) und zwei zweite Verteilermittel (D4, D5) umfasst, **dadurch gekennzeichnet, dass** die ersten Verteilermittel (D1) ein normalerweise geschlossener 4/3-Verteiler, vorzugsweise ein in Mittelstellung geschlossener 4/3-Verteiler mit elektrischer Steuerung und Federrückstellung sind.

3. Hydraulische Regulierungsvorrichtung nach Anspruch 2, **dadurch gekennzeichnet, dass** das versorgungseitige erste E/A-Mittel (41) und jedes erstkammerseitige E/A-Mittel (51) durch eine als Erstreckungsleitung bezeichnete Leitung (L1, L2) verbunden sind, in welcher ein normalerweise geschlossener 2/2-Verteiler (D2), vorzugsweise mit elektrischer Steuerung und Federrückstellung, zwischengestellt ist, und dadurch, dass das versorgungsseitige zweite E/A-Mittel (42) und jedes zweitkammerseitige E/A-Mittel (52) durch eine als Rückzugleitung bezeichnete Leitung (L3, L4) verbunden sind, in welcher ein normalerweise geschlossener 2/2-Verteiler (D3), vorzugsweise mit elektrischer Steuerung und Federrückstellung, zwischengestellt ist.

4. Hydraulische Regulierungsvorrichtung nach einem der Ansprüche 1 bis 3, **dadurch gekennzeichnet, dass** das zweite Dämpfungselement (62) mit dem oder jedem zweitkammerseitigen E/A-Mittel (52) durch eine als Dämpfungsleitung bezeichnete Leitung (L7) verbunden ist, in welcher ein normalerweise geschlossener 2/2-Verteiler (D4, D5), vorzugsweise mit elektrischer Steuerung und Federrückstellung, zwischengestellt ist, und gegebenenfalls die Dämpfungsleitung (L7) mit der Rückzugsleitung (L3, L4) im Bereich eines Punkts (P3, P5) kommuniziert, der sich zwischen dem zweitkammerseitigen E/A-Mittel (52) und dem in der Rückzugsleitung (L3, L4) zwischengestellten 2/2-Verteiler (D3) befindet.

5. Hydraulische Regulierungsvorrichtung nach einem der Ansprüche 1 bis 4, **dadurch gekennzeichnet, dass** das versorgungsseitige zweite E/A-Mittel (42) mit dem ersten und zweiten Dämpfungselement (61, 62) in Kommunikation ist, wobei ein erster Druckreduzierer (Rp1, Rp2) zwischen dem versorgungsseitigen zweiten E/A-Mittel (42) und dem ersten Dämpfungselement (61) zwischengestellt ist, wohingegen ein zweiter Druckreduzierer (Rp2) zwischen dem versorgungsseitigen zweiten E/A-Mittel (42) und dem zweiten Dämpfungselement (62) zwischengestellt ist, wobei der erste und zweite Druckreduzierer (Rp1, Rp2) bestimmt sind, den Druck des Fluids vom Versorgungsdruck jeweils auf den ersten Dämpfungswert und auf den zweiten Dämpfungswert zu reduzieren.

6. Hydraulische Regulierungsvorrichtung nach Anspruch 5, **dadurch gekennzeichnet, dass** ein Anti-Rückschlagventil (C1, C2) zwischen jedem Druckreduzierer (Rp1, Rp2) und dem jeweiligen Dämpfungselement (61, 62) zwischengestellt ist, wobei sich die Anti-Rückschlagventile (C1, C2) öffnen, wenn der Druck am Ausgang des Druckreduzierers (Rp1, Rp2) über dem Druck nach dem Anti-Rückschlagventil (C1, C2) liegt.

7. Hydraulische Regulierungsvorrichtung nach einem der Ansprüche 5 und 6, wenn in Abhängigkeit von Anspruch 4 herangezogen, **dadurch gekennzeichnet, dass** die Dämpfungsleitung (L7) im Bereich eines Punkts (P4) mit dem Ausgang des zweiten Druckreduzierers (Rp2), gegebenenfalls mit dem Ausgang des entsprechenden Anti-Rückschlagventils (C2), in Kommunikation ist, wobei sich der mindestens eine 2/2-Verteiler (D4), der in der Dämpfungsleitung (L7) zwischengestellt ist, zwischen dem zweitkammerseitigen E/A-Mittel (52) und dem Punkt (P4) befindet, in dessen Bereich die Dämpfungsleitung (7) mit dem Ausgang des zweiten Druckreduzierers (Rp2), gegebenenfalls mit dem Ausgang des entsprechenden Anti-Rückschlagventils (C2), kommuniziert.

8. Hydraulische Regulierungsvorrichtung nach einem der Ansprüche 1 bis 7, **dadurch gekennzeichnet, dass** das erste und zweite Dämpfungselement (61, 62) Hydraulikdruckakkumulatoren sind.

9. Hydraulische Regulierungsvorrichtung nach einem der Ansprüche 1 bis 8, **dadurch gekennzeichnet, dass** sie von einem Block (B) gebildet ist, der aus einem Teil besteht, in das Bohrungen durchgeführt wurden, die im Bereich von Öffnungen auf Außenflächen des Teils ausmünden, wobei die versorgungsseitigen E/A-Mittel (41, 42) und die erstkammerseitigen (51), zweitkammerseitigen (52) und drittkammerseitigen (53) E/A-Mittel vorzugsweise von den Öffnungen oder von Anschlüssen, die in den Öffnungen angebracht sind, gebildet sind, wohingegen gegebenenfalls die Leitungen, in denen die zweiten Verteilermittel (D4, D5), die 2/2-Verteiler (D2, D3), die Druckreduzierer (Rp1, Rp2) und/oder die Anti-Rückschlagventile (C1, C2) zwischengestellt sind, von den Bohrungen gebildet sind.

10. Steuerungssystem mit Dämpfung des Ausfahrens und des Einfahrens von mindestens einem Sprühbalkenabschnitt, vorzugsweise von zwei Abschnitten, wobei das System für den oder jeden Abschnitt eine Hydraulikzylindereinheit (1A, 1B) umfasst, umfassend zum einen einen aktiven Doppeleffektzylinder (2), einen aktiven Kolben (21) mit einer Stange und einem Kopf aufweisend, wobei der Kopf eine erste Kammer (22) kopfseitig und eine zweite Kammer (23) stangenseitig trennt, und zum anderen einen passiven Zylinder (3), einen passiven Kolben (31) aufweisend, dessen Kopf eine dritte Kammer (32) schließt, die von der ersten Kammer (22) durch eine Trennwand getrennt ist, wobei das System ferner eine Fluidquelle mit einem als Versorgungsdruckwert bezeichneten Druckwert und einen Fluidvorratsbehälter umfasst, wobei das System **dadurch gekennzeichnet ist, dass** es eine hydraulische Regulierungsvorrichtung nach einem der Ansprüche 1 bis 9 umfasst.

## Claims

1. A hydraulic control device for a control system for controlling, with damping, the deployment and folding of at least one spray boom segment, said system comprising, for the or each segment, a hydraulic jack assembly (1A, 1B) comprising, on the one hand, an active double-acting jack (2) including an active piston (21) having a rod and a head, the head separating a first chamber (22), on the head side, and a second chamber (23), on the rod side, and on the other hand, a passive jack (3) including a passive piston (31) whose head closes a third chamber (32) separated from said first chamber (22) by a separating wall, the hydraulic control device comprising first and second damping elements (61) configured to be placed in communication with said third chamber (32) and said second chamber (23), respectively,
the hydraulic control device being **characterised in that** it further comprises:
- first and second fluid inlet/outlet means, called supply-side I/O means (41, 42),
- for the or each hydraulic jack assembly (1A, 1B):
- a fluid inlet/outlet means on the side of the first chamber, called first chamber-side I/O means (51), in communication with the first supply-side I/O means (41) and configured to be coupled to said first chamber (22),
- a second chamber-side fluid inlet/outlet means, called second chamber-side I/O means (52), in communication with the second supply-side I/O means (42) and configured to be coupled to said second chamber (23),
- a third chamber-side fluid inlet/outlet means, called third chamber-side I/O means (53), coupled to the first damping element (61) and by which the latter will be placed in communication with said third chamber (32),
- first directional control valve means (D1) that are, on a first side, coupled to the first and second supply-side I/O means (41, 42) and, on a second side, configured to be coupled to a fluid source at a so-called supply pressure value and to a fluid reservoir, the first directional control valve means (D1) being able to be actuated in order to:
- in a first position, place the first and second supply-side I/O means (41, 42) in communication respectively with the fluid source and the fluid reservoir, to fold the segment,
- in a second position, place the first and second supply-side I/O means (41, 42) in communication respectively with the fluid reservoir and the fluid source, in order to deploy the segment, and
- in a third position, cut the communication between the first and second supply-side I/O means (41, 42), on the one hand, and the fluid source and the fluid reservoir, on the other hand,
- second directional control valve means (D4, D5) interposed between the second damping element (62) and the second chamber-side I/O means (52) and able to be actuated to:
- in a first position, cut the communication between the second damping element (62) and the second chamber-side I/O means (52), and
- in a second position, place the second damping element (62) in communication with the second chamber-slide means (52),
and by the fact that the first and second damping elements (61, 62) are defined in order to provide a fluid pressure respectively at a first damping value at the third chamber-side I/O means (53) and at a second damping value at the second chamber-side means (52), which are such that the ratio of the first damping value to the second damping value is equal to the ratio of the surface area of the separating wall separating said first and third chambers (22, 32) to the surface area of the head, on the rod side, of the active piston (21).

2. The hydraulic control device according to claim 1, for a control system for controlling the deployment and folding of two spray boom segments, the hydraulic control device thus comprising two first chamber-side I/O means (51), two second chamber-side I/O ends (52), two third chamber-side I/O means (53), and two second directional control valve means (D4, D5), **characterised in that** the first directional control valve means (D1) are a 4/3 directional control valve, preferably a closed center 4/3 directional control valve, with electric control and spring return, normally closed.

3. The hydraulic control device according to claim 2, **characterised in that** the first supply-side I/O means (41) and each first chamber-side I/O means (51) are coupled by a so-called extension line (L1, L2), in which a 2/2 directional control valve (D2) is interposed, preferably with electric control and spring return, normally closed, and **in that** the second supply-side I/O means (42) and each second chamber-side I/O means (52) are coupled by a so-called retraction line (L3, L4), in which a 2/2 directional control valve (D3) is interposed, preferably with electric control and spring return, normally closed.

4. The hydraulic control device according to any one of claims 1 to 3, **characterised in that** the second damping element (62) is coupled to the or each second chamber-side I/O means (52) by a so-called damping line (L7) in which a 2/2 directional control valve (D4, D5) is interposed, preferably with electric control and spring return, normally closed, and if applicable, the damping line (L7) communicates with the retraction line (L3, L4) at a point (P3, P5) that is located between the second chamber-side I/O means (52) and the 2/2 directional control valve (D3) interposed in the retraction line (L3, L4).

5. The hydraulic control device according to any one of claims 1 to 4, **characterized in that** the second supply-side I/O means (42) is in communication with the first and second damping elements (61, 62), a first pressure reducing valve (Rp1, Rp2) being interposed between the second supply-side I/O means (42) and the first damping element (61) while a second pressure reducing valve (Rp2) is interposed between the second supply-side I/O means (42) and the second damping element (62), the first and second pressure reducing valves (Rp1, Rp2) being configured to reduce the pressure of the fluid from the supply value to the first damping value and the second damping value, respectively.

6. The hydraulic control device according to claim 5, **characterised in that** a check valve (C1, C2) is interposed between each pressure reducing valve (Rp1, Rp2) and the respective damping element (61, 62), the check valves (C1, C2) opening when the pressure at the outlet of the pressure reducing valve (Rp1, Rp2) is higher than the pressure downstream from the check valve (C1, C2).

7. The hydraulic control device according to one of claims 5 and 6 when they depend on claim 4, **characterised in that** the damping line (L7) is in communication, at a point (P4), with the outlet of the second pressure reducing valve (Rp2), if applicable with the outlet of the corresponding check valve (C2), the at least one 2/2 directional control valve (D4) interposed in the damping line (L7) being located between the second chamber-side I/O means (52) and said point (P4) at which the damping line (7) communicates with the outlet of the second pressure reducing valve (Rp2), if applicable the outlet of the corresponding check valve (C2).

8. The hydraulic control device according to any one of claims 1 to 7, **characterised in that** the first and second damping elements (61, 62) are hydraulic pressure accumulators.

9. The hydraulic control device according to any one of claims 1 to 8, **characterised in that** it is formed by a block (B) consisting of a part in which boreholes have been made emerging at orifices on outer surfaces of said part, the supply-side I/O means (41, 42) and the first chamber-side (51), second chamber-side (52) and third chamber-side (53) I/O means preferably being formed by said orifices or by couplers mounted in said orifices, while, if applicable, the lines in which the second directional control valve means (D4, D5), the 2/2 directional control valves (D2, D3), the pressure reducing valves (Rp1, Rp2) and/or the check valves (C1, C2) are interposed are formed by said boreholes.

10. A system, with damping, for controlling the deployment and folding of at least one spray boom segment, preferably two segments, the system comprising, for the or each segment, a hydraulic jack assembly (1A, 1B) comprising, on the one hand, an active double-acting jack (2) including an active piston (21) having a rod and a head, the head separating a first chamber (22), on the head side, and a second chamber (23), on the rod side, and on the other hand, a passive jack (3) including a passive piston (31), the head of which closes a third chamber (32) separated from said first chamber (22) by a separating wall, the system further comprising a fluid source at a first pressure value called supply pressure and a fluid reservoir, the system being **characterised in that** it comprises a hydraulic control device as defined in any one of claims 1 to 9.
